# EUROPEAN PATENT APPLICATION

(11) **EP 4 807 705 A1**
(43) Date of publication of application: **16.09.2026**
(21) Application number: 25226176.3
(22) Date of filing: 22.12.2025
(51) Int. Cl.: G07C 9/00

(54) **CONTROL MODULE FOR CONTROLLING VEHICLE REMOTE CONTROL AND APPLICATION METHOD THEREOF**

(30) Priority: 06.11.2025 TW 114143217
(71) Applicant: IVTES LTD., New Taipei City (TW)
(72) Inventor: CHEN, Chi-Ting, New Taipei City (TW)
(74) Representative: Cabinet Chaillot

(57) **Abstract**

A control module for controlling vehicle remote control (10), comprising: a power supply module (40), a vehicle remote control (20), a Bluetooth controller device (30), a signal switching switch (34) electrically connected to the vehicle remote control (20), and a mode switching control key (35). The mode switching control key (35) controls the control module for controlling vehicle remote control (10) to enter either a remote-control operation mode or a Bluetooth operation mode. The power supply module (40) controls power supply to the vehicle remote control (20) and the Bluetooth controller device (30). The invention also relates to an application method, comprising an application program that displays a graphic block in different colors on a mobile device (50) to respectively represent different connection statuses and operation modes between the mobile device (50) and the Bluetooth controller device (30).

## Description

The present invention relates to an extended application of a vehicle key remote control. Specifically, the invention pertains to a control module for controlling vehicle remote control and application method thereof.

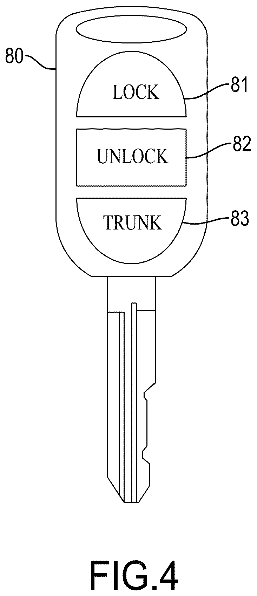

Nowadays, automobiles are equipped with a car key fob by the manufacturer at the time of production to control certain vehicle operations. This car key fob features multiple buttons, as illustrated in Figure 4. Figure 4 depicts an existing car key fob 80, which includes a lock button 81, an unlock button 82, and a trunk release button 83 to perform actions such as locking, unlocking, and opening the trunk of a vehicle. Existing car key fobs are typically carried by car owners. However, loss, misplacement, or accidental locking inside the vehicle causes significant inconvenience and hassle. Additionally, consideration must be given to different scenarios, such as when the owner uses the vehicle personally or entrusts it to service personnel for maintenance, car wash, or parking. The challenge lies in how a car key fob can provide tailored functionalities for these diverse scenarios to benefit both owners and service personnel.

Nowadays, manufacturers equip automobiles with car key fobs to control certain vehicle operations. As illustrated in Figure 4, this car key fob features multiple buttons. Figure 4 shows a typical car key fob 80 with lock 81, unlock 82 and trunk release 83 buttons to lock, unlock and open the trunk of a vehicle. Car key fobs are typically carried by owners. However, loss or misplacement of the key fob, or accidentally locking it inside the vehicle, can cause significant inconvenience and hassle. Additionally, consideration must be given to different scenarios, such as when the owner uses the vehicle personally or entrusts it to service personnel for maintenance, washing or parking. The challenge lies in designing a car key fob that can provide tailored functionalities for these diverse scenarios, benefiting both owners and service personnel.

In view of the above, the present invention proposes a control module for controlling vehicle remote control, enabling a mobile device to control a vehicle remote control via a Bluetooth controller device. Thus, the control module for controlling vehicle remote control of the present invention can be placed in a vehicle during normal use, eliminating the need for carrying the vehicle remote control personally and avoiding various inconveniences. Simultaneously, the control module for controlling vehicle remote control of the present invention can switch operation modes to provide different functions based on different usage scenarios whether for the vehicle owner themselves or for service personnel, and thereby facilitating convenience for both the vehicle owner and service personnel. The present invention achieves the afore-mentioned objectives through a control module for controlling vehicle remote control, which comprises:
a vehicle remote control, being a circuit module of a car key remote control, comprising:
   a plurality of connection ends;
   a processor, to which the plurality of connection ends are connected;
   a plurality of operation buttons, each operation button respectively connected to a corresponding one of the plurality of connection ends, and each operation button respectively connected to the processor;
a Bluetooth controller device, electrically connected to the vehicle remote control, comprising:
   a signal switching switch, the signal switching switch having a plurality of output terminals and a plurality of signal input terminals corresponding to the plurality of output terminals, the plurality of output terminals being respectively connected to the plurality of connection ends of the vehicle remote control;
   a signal output circuit having a plurality of signal output ends and an input end, wherein the plurality of signal output ends of the signal output circuit are respectively connected to the plurality of signal input terminals of the signal switching switch;
   a Bluetooth processor having an output end and an input end, wherein the output end of the Bluetooth processor is electrically connected to the input end of the signal output circuit;
   a Bluetooth transceiver module having an output end, wherein the output end of the Bluetooth transceiver module is electrically connected to the input end of the Bluetooth processor, and the Bluetooth transceiver module is configured to receive/respond to a Bluetooth signal transmitted from a mobile device;
   a mode switching control key, having an output end, wherein the output end of the mode switching control key is connected to a control terminal of the signal switching switch to control ON/OFF (conducting/disconnected) between the plurality of signal input terminals of the signal switching switch and the corresponding plurality of output ends of the signal switching switch.

In one embodiment, the control module for controlling vehicle remote control further comprises: a power supply module, the power supply module comprises a control module power supply, a first power switch, a second power switch, a first power supply switch, and a second power supply switch to control power delivery to the vehicle remote control and the Bluetooth controller device.

The present invention also provides an application method for the control module for controlling vehicle remote control, comprising:
an application being executed by a mobile device;
the application determining a connection status between the mobile device and a Bluetooth controller device of said control module for controlling vehicle remote control;
when a connection established between the mobile device and the Bluetooth controller device is determined, the Bluetooth controller device obtains the operation mode of a mode switching control key of said control module for controlling vehicle remote control;
the application displaying a monochrome graphic block via the mobile device, wherein different colors in which the monochrome graphic block is displayed correspond to different connection statuses and/or operation modes.

The present invention also provides an application method for the control module for controlling vehicle remote control, comprising:
an application executed by a mobile device;
the application determining whether said control module for controlling vehicle remote control is switching between a remote-control operation mode and a Bluetooth operation mode;
when the application determines that said control module for controlling vehicle remote control is switching between the remote-control operation mode and the Bluetooth operation mode, the application determining whether the mobile device is still connected to said control module for controlling vehicle remote control;
when the application determines that the mobile device is still connected to said control module for controlling vehicle remote control, the application determining, through a Bluetooth controller device of said control module for controlling vehicle remote control, an operation mode to which said control module for controlling vehicle remote control is switched, and then activating or deactivating a pause function according to the operation mode, causing the Bluetooth controller device of said control module for controlling vehicle remote control to stop or resume control of a vehicle remote control of said control module for controlling vehicle remote control, the application also displaying a corresponding icon on the mobile device.

The control module for controlling vehicle remote control of the present invention can optionally switch to the remote-control operation mode to facilitate handing over the vehicle to service personnel. This allows the service personnel to directly operate vehicle functions such as locking, unlocking, and opening the trunk by pressing buttons on the control module for controlling vehicle remote control, thereby assisting the service personnel in performing maintenance, washing, or parking tasks. Alternatively, the control module for controlling vehicle remote control of the present invention can optionally switch to the Bluetooth operation mode to enable the vehicle owner or driver to use a mobile device to control vehicle actions such as locking, unlocking, and opening the trunk. The present invention also provides different power supply options based on the selected operation mode to conserve energy. Furthermore, the invention provides a mobile device application that enables the owner or driver's mobile device to obtain and display the selected operation mode and the current Bluetooth connection status between the mobile device and the control module for controlling vehicle remote control. Thus, the objectives of the present invention are achieved.

In order to make the above objects, features and advantages of the present invention more apparent and easier to understand, the following embodiments, together with the accompanying drawings, are described in detail as follows.

### In the drawings:

FIG. 1: The circuit block diagram of the control module for controlling vehicle remote control of the present invention;
FIG. 2: Circuit block diagram of an application embodiment of the control module for controlling vehicle remote control of the present invention;
FIG. 3: A circuit block diagram of another application embodiment of the control module for controlling vehicle remote control of the present invention; and
FIG. 4: A schematic diagram of a conventional car key fob.

The technical contents, features and effects of the present invention will be clearly presented in the following detailed description of the preferred embodiment with reference to the drawings. In addition, the directional terms mentioned in the following embodiments, such as: up, down, left, right, front, back, bottom, top, etc., are only relative directions with reference to the drawings, and do not represent absolute directional positions; therefore, the directional terms used are for the convenience of illustrating their relative positional relationships, and are not intended to impose limitations on the present invention.

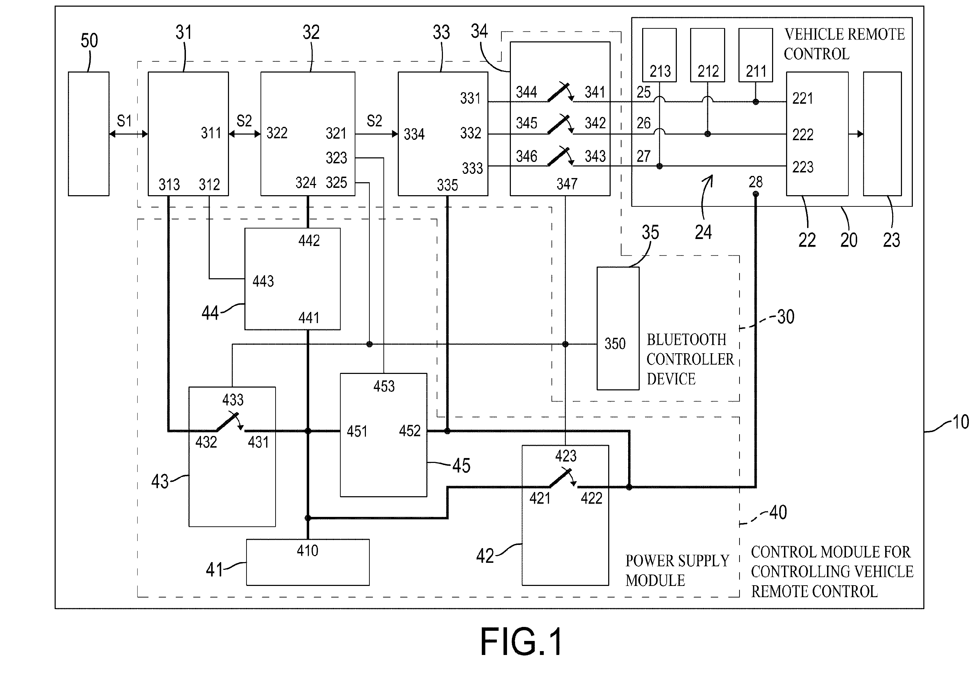

Please refer to Figure 1. Figure 1 illustrates a circuit diagram of a control module for controlling vehicle remote control 10 of the present invention, which comprises: a vehicle remote control 20, a Bluetooth controller device 30 connected to the vehicle remote control 20, and a power supply module 40 providing power to the vehicle remote control 20 and the Bluetooth controller device 30. The vehicle remote control 20 is a circuit module for a car key remote control, such as a car key fob.

The vehicle remote control 20 comprises: a circuit board (not shown) and a plurality of connection ends 25-27 disposed on the circuit board, a processor 22 having a plurality of input ends 221-223 wherein the plurality of input ends 221-223 are respectively connected to the plurality of connection ends 25-27 on the circuit board via a wire assembly 24, a signal transmission circuit 23 electrically connected to an output end of the processor 22, and a plurality of operation buttons 211-213 respectively connected via corresponding wires of the wire assembly 24 to the plurality of connection ends 25-27 on the circuit board and to the plurality of input ends 221-223 of the processor 22. The processor 22, the signal transmission circuit 23, and the plurality of operation buttons 211-213 are all connected to a power input terminal 28 via the circuit board to receive electric power therefrom.

The Bluetooth controller device 30 comprises: a signal switching switch 34, wherein the signal switching switch 34 has a plurality of output ends 341 to 343 and a plurality of signal input terminals 344 to 346 respectively corresponding to the plurality of output ends 341 to 343. The plurality of output ends 341 to 343 of the signal switching switch 344 are respectively connected to the plurality of connection ends 25 to 27 of the vehicle remote control 20, and the signal switching switch 34 further comprises a control terminal 347 which can simultaneously control the ON/OFF between the output end 341 and the signal input terminal 344, between the output end 342 and the signal input terminal 345, and between the output end 343 and the signal input terminal 346. When the control terminal 347 controls the signal switching switch 34 to be in an OFF (disconnected) state, the Bluetooth controller device 30 cannot control the vehicle remote control 20 via the signal switching switch 34. When the control terminal 347 controls the signal switching switch 34 to be in an ON (conducting) state, the Bluetooth controller device 30 can control the vehicle remote control 20 via the signal switching switch 34.

Continuing from the above, the Bluetooth controller device 30 further comprises a signal output circuit 33, which has a plurality of signal output terminals 331-333, an input end 334, and a power input terminal 335. The plurality of signal output terminals 331-333 of the signal output circuit 33 are respectively connected to the plurality of signal input terminals 344-346 of the signal switching switch 34. The Bluetooth controller device 30 further comprises a Bluetooth processor 32, which has an output end 321, an input end 322, a power control terminal 323, and a power input terminal 324. The output end 321 of the Bluetooth processor 32 is electrically connected to the input end 334 of the signal output circuit 33. The Bluetooth controller device 30 further comprises a Bluetooth transceiver module 31, which has an output end 311, a power control terminal 312 and a power input terminal 313, the output end 311 of the Bluetooth transceiver module 31 is electrically connected to the input end 322 of the Bluetooth processor 32, and the Bluetooth transceiver module 31 is used to receive a Bluetooth signal S1 sent by a mobile handheld device 50. The Bluetooth controller device 30 further comprises a mode switching control key 35 with an output end 350, and the output end 350 of the mode switching control key 35 is connected to the control terminal 347 of the signal switching switch 34. The power supply module 40 comprises a control module power supply 41, a first power switch 42, a second power switch 43, a first power supply switch 44, and a second power supply switch 45. The control module power supply 41 has an output end 410 that can output a DC voltage; the first power switch 42 has an input end 421 connected to the output end 410 of the control module power supply 41, an output end 422 connected to the power input terminal 28 of the vehicle remote control 20, and a control terminal 423 connected to the output end 350 of the mode switching control key 35; the second power switch 43 has an input end 431 connected to the output end 410 of the control module power supply 41, an output end 432 connected to the power input terminal 313 of the Bluetooth transceiver module 31, and a control terminal 433 connected to the output end 350 of the mode switching control key 35. The first power supply switch 44 has an input end 441 connected to the output end 410 of the control module power supply 41, an output end 442 connected to the power input terminal 324 of the Bluetooth processor 32, and a control terminal 443 connected to the control terminal power control terminal 312 of the Bluetooth transceiver module 31. The second power supply switch 45 has an input end 451 connected to the output end 410 of the control module power supply 41, an output end 452 connected to the power input terminal 28 of the vehicle remote control 20 and the power input terminal 335 of the signal output circuit 33, and a control terminal 453 connected to the power control terminal 323 of the Bluetooth processor 32. In one embodiment, the power of the control module power supply 41 is from a battery or a vehicle charger port.

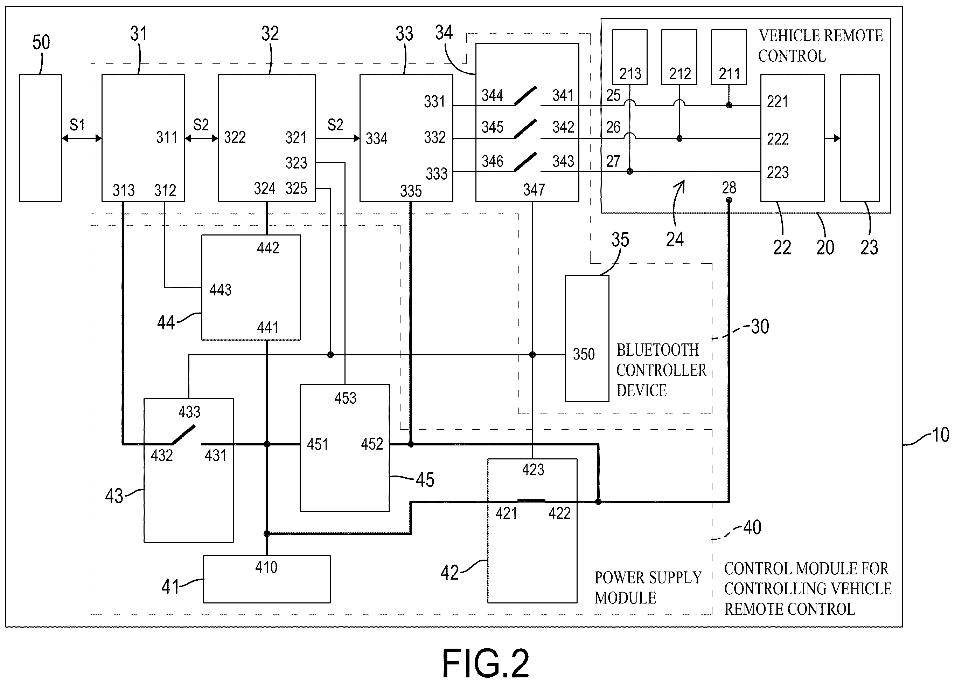

Please refer to Figure 2. Figure 2 is an application embodiment of a first operation mode of the control module for controlling vehicle remote control 10 of the present invention. In the first operation mode (i.e., a remote-control operation mode), the mode switching control key 35 is set to an ON state. The output end 350 of the mode switching control key 35 outputs a turn-on voltage VON to the control terminal 347 of the signal switching switch 34, the control terminal 423 of the first power switch 42, and the control terminal 433 of the second power switch 43 that turns the signal switching switch 34 OFF (disconnected), the first power switch 42 ON (conducting), and the second power switch 43 OFF (disconnected). As a result, the first power switch 42 supplies power to all components of the vehicle remote control 20 via the power input terminal 28, and the vehicle remote control 20 and the Bluetooth controller device 30 are disconnected from each other. Therefore, no input signal from the Bluetooth controller device 30 is received at the plurality of connection ends 25-27 of the vehicle remote control 20, and the vehicle remote control 20 can be used to directly operate various functions of the vehicle, such as locking, unlocking, and opening the trunk, by pressing the plurality of operation buttons 211-213, just like a regular car key fob. Users can operate these functions themselves, making this first operation mode suitable for service personnel to perform vehicle maintenance, car washing, or parking.

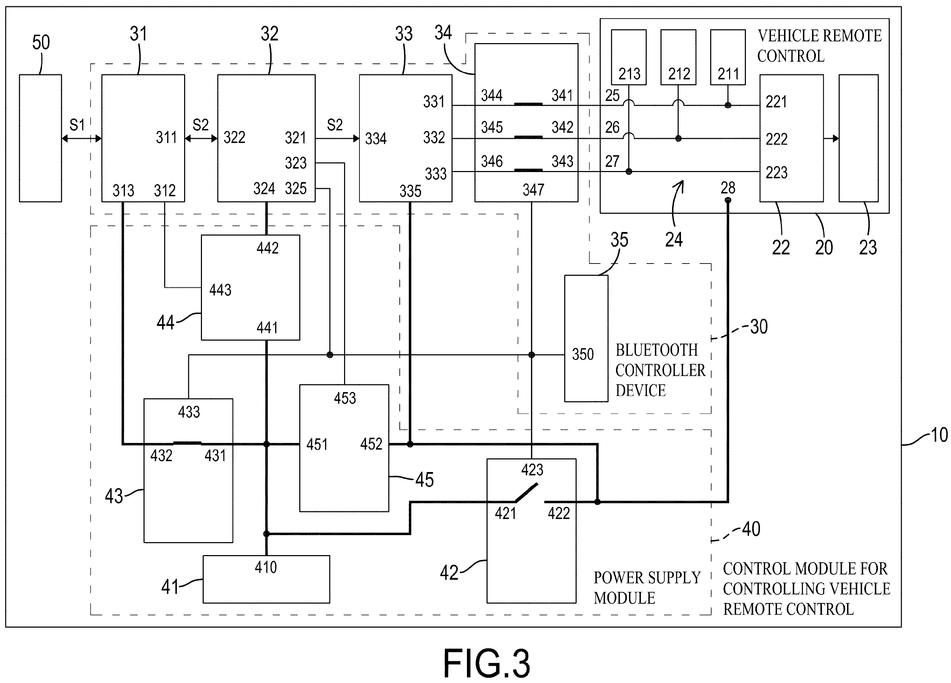

Please refer to Figure 3. Figure 3 illustrates an application embodiment of a second operation mode of the control module for controlling vehicle remote control 10 of the present invention. In this second operation mode (i.e., a Bluetooth operation mode), the mode switching control key 35 is set to an OFF state. The output end 350 of the mode switching control key 35 outputs a turn-off voltage VOFF to the control terminal 347 of the signal switching switch 34, the control terminal 423 of the first power switch 42, and the control terminal 433 of the second power switch 43. This makes the signal switching switch 34 ON (conducting), the first power switch 42 off, and the second power switch 43 ON (conducting). Thus, the control module power supply 41 provides power to the Bluetooth transceiver module 31 via the second power switch 43. Therefore, the Bluetooth transceiver module 31 can work normally and receive Bluetooth signals from the mobile handheld device 50. At this time, if a Bluetooth connection is established between the Bluetooth transceiver module 31 and the mobile handheld device 50, the control terminal power control terminal 312 of the Bluetooth transceiver module 31 will send an ON (conducting) signal to the control terminal 443 of the first power supply switch 44, making the first power supply switch 44 ON (conducting). Thus, the control module power supply 41 provides power to the Bluetooth processor 32 via the first power supply switch 44, allowing the Bluetooth processor 32 to operate normally. Furthermore, the Bluetooth processor 32 receives and confirms whether the signal S2 transmitted from the Bluetooth transceiver module 31 contains an instruction to operate the vehicle remote control 20. If the Bluetooth processor 32 confirms that the signal S2 transmitted from the Bluetooth transceiver module 31 contains an instruction to operate the vehicle remote control 20, the control terminal power control terminal 323 of the Bluetooth processor 32 will send an ON (conducting)signal to the control terminal 453 of the second power supply switch 45, making the second power supply ON (conducting), thus the control module power supply 41 supplies power to the signal output circuit 33 and all components of the vehicle remote control 20 via the second power supply switch 45. At this time, the Bluetooth processor 32 processes the command for operating the vehicle remote control 20 and transmits the processed command to the signal output circuit 33. The signal output circuit 33 adjusts the electrical level of the processed command, and then the command with the adjusted electrical level is transmitted to the processor 22 via the signal switching switch 34 and the plurality of connection ends 25-27 of the vehicle remote control 20. This enables the signal transmission circuit 23 to transmit corresponding wireless signals, thereby operating various functions of the vehicle, such as locking, unlocking, and opening the trunk.

Continuing from the above, in the second operation mode, if no Bluetooth connection is established between the Bluetooth transceiver module 31 and the mobile handheld device 50, the control terminal power control terminal 312 of the Bluetooth transceiver module 31 will not send the ON (conducting) signal to the control terminal 443 of the first power supply switch 44. As a result, the first power supply switch 44 is OFF (disconnected), so the control module power supply 41 cannot supply power to the Bluetooth processor 32, the signal output circuit 33, and the vehicle remote control 20, thus saving power.

Continuing from the above, in the second operation mode, if a Bluetooth connection is established between the Bluetooth transceiver module 31 and the mobile handheld device 50, but the mobile handheld device 50 does not issue a command to operate the vehicle remote control 20, then the power control terminal 323 of the Bluetooth processor 32 will not send the ON (conducting) signal to the control terminal 453 of the second power supply switch 45. Thus, the second power supply switch 45 is OFF (disconnected), and the control module power supply 41 will not supply power to the signal output circuit 33 and the vehicle remote control 20, thereby saving power.

The second operation mode is mainly used by the mobile handheld device 50 to issue commands to operate the vehicle remote control 20, so the second operation mode is more suitable for car owners or drivers.

In one embodiment, the Bluetooth processor 32 further has a mode detection input terminal 325, which is connected to the output end 350 of the mode switching control key 35. Thereby the Bluetooth controller device 30 is notified about whether the control module for controlling vehicle remote control 10 of the present invention is currently operating in the first operation mode or the second operation mode.

In one embodiment, the Bluetooth controller device 30 is further provided with a buzzer (not shown), which is connected to the output end 350 of the mode switching control key 35. When the mode switching control key 35 selects the first operation mode, the output end 350 outputs a turn-on voltage VON, causing the buzzer to emit a first sound, such as a beep. When the mode switching control key 35 selects the second operation mode, the output end 350 outputs a turn-off voltage VOFF, causing the buzzer to emit a second sound, such as two beeps. In this way, the user can be informed by sound regarding whether the current state is the first operation mode or the second operation mode.

The present invention further discloses that the mobile handheld device 50 displays the operational status between the mobile handheld device 50 and the Bluetooth controller device 30 via an application (APP). In one embodiment, the application (APP) may display a graphic block, such as a vehicle icon representing a vehicle which may display various colors. Furthermore, the application (APP) allows users to select status descriptions corresponding to different colors of the vehicle icon, enabling the users to easily understand the current operating status. In one embodiment, the operating status descriptions corresponding to different colors of the vehicle icon are as follows:
Green: After launching the application (APP) on the mobile handheld device 50, the application (APP) will establish a Bluetooth connection with the designated Bluetooth controller device 30. However, the Bluetooth connection is established without pairing, and the vehicle icon is displayed in green.
Blue: When the Bluetooth controller device 30 and the mobile handheld device 50 are paired, select "Bluetooth Connection" mode in option settings. When the Bluetooth controller device 30 and the mobile handheld device 50 are connected, the vehicle icon is displayed in blue.
Orange: When the Bluetooth controller device 30 and the mobile handheld device 50 are paired, select the "Control Period" mode in the option settings. When the Bluetooth controller device 30 and the mobile handheld device 50 are connected, the vehicle icon is displayed in orange.
Yellow: When the power supply mode of the control module for controlling vehicle remote control 10 switches to the first operation mode (i.e., remote-control operation mode), the vehicle icon displayed in the application (APP) turns yellow upon establishing a Bluetooth connection between the mobile handheld device 50 and the Bluetooth controller device 30.
Gray: When the Bluetooth controller device 30 is not connected via Bluetooth to the mobile handheld device 50, the vehicle icon turns grayish upon launching the application (APP) on the mobile handheld device 50.

In one embodiment, when the control module for controlling vehicle remote control 10 switches between the first and the second operation modes (i.e., the remote-control operation mode and the Bluetooth operation mode), if the mobile handheld device 50 remains connected to the Bluetooth controller device 30, the mobile handheld device 50 must work with the application (APP) to determine from the Bluetooth controller device 30 to which operation mode the control module for controlling vehicle remote control 10 has switched. This enables corresponding activation or deactivation of a pause function, which makes the Bluetooth controller device 30 stop or resume control of the vehicle remote control 20. The application (APP) then displays corresponding icons on the mobile handheld device 50.

When the control module for controlling vehicle remote control 10 of the present invention switches to the first operation mode: the application (APP) activates the pause function, and the mobile handheld device 50 stops controlling the vehicle remote control 20. In this scenario, when any mobile handheld device paired with the Bluetooth controller device 30 approaches the Bluetooth controller device 30 from a distance, the Bluetooth controller device 30 will connect the mobile handheld device and send a push notification command in a close range, causing the mobile handheld device to generate a corresponding push notification message to remind the user of the mobile handheld device that the Bluetooth controller device 30 has been paused, rather than being perceived as no-response due to malfunctioning, and thereby reminds the user to switch the control module for controlling vehicle remote control 10 of the present invention to enter the operation mode desired by the user.

When the control module for controlling vehicle remote control 10 of the present invention switches to the second operation mode: the application (APP) on the mobile handheld device 50 will deactivate the pause function, and the mobile handheld device 50 will resume control over the vehicle remote control 20.

Although the present invention has been disclosed as above by way of a preferred embodiment, it is not intended to limit the present invention, and any one skilled in the art may make certain changes and modifications without departing from the spirit and scope of the present invention, and therefore the scope of protection of the present invention shall be subject to the scope of the appended patent claims as defined herein.

## Claims

1. A control module for controlling vehicle remote control (10), **characterized by** comprising:
a vehicle remote control (20), being a circuit module of a car key remote control, and comprising:
a plurality of connection ends (25-27);
a processor (22), to which the plurality of connection ends (25-27) are connected;
a plurality of operation buttons (211-213), each operation button (211-213) respectively connected to a corresponding one of the plurality of connection ends (25-27), and each operation button (211-213) respectively connected to the processor (22);
a Bluetooth controller device (30), electrically connected to the vehicle remote control (20), comprising:
a signal switching switch (34), the signal switching switch (34) having a plurality of output terminals (341-343) and a plurality of signal input terminals (344-346) corresponding to the plurality of output terminals (341-343), the plurality of output terminals (341-343) respectively connected to the plurality of connection ends (25-27) of the vehicle remote control (20);
a signal output circuit (33) having a plurality of signal output ends (331-333) and an input end (334), wherein the plurality of signal output ends (331-333) of the signal output circuit (33) are respectively connected to the plurality of signal input terminals (344-346) of the signal switching switch (34);
a Bluetooth processor (32) having an output end (321) and an input end (322), wherein the output end (321) of the Bluetooth processor (32) is electrically connected to the input end (334) of the signal output circuit (33);
a Bluetooth transceiver module (31) having an output end (311), wherein the output end (311) of the Bluetooth transceiver module (31) is electrically connected to the input end (322) of the Bluetooth processor (32), and the Bluetooth transceiver module (31) is configured to receive and respond to a Bluetooth signal (S1) transmitted from a mobile device (50);
a mode switching control key (35), having an output end (350), wherein the output end (350) of the mode switching control key (35) is connected to a control terminal (347) of the signal switching switch (34) to control ON/OFF (conducting/disconnected) between the plurality of signal input terminals (344-346) of the signal switching switch (34) and the corresponding plurality of output ends (341-343) of the signal switching switch (34).

2. The control module for controlling vehicle remote control (10) as claimed in claim 1, wherein when the mode switching control key (35) controls the signal switching switch (34) to be OFF (disconnected), the control module for controlling vehicle remote control (10) enters a remote-control operation mode, and the vehicle remote control (20) is operable via the plurality of operation buttons (211-213) on the vehicle remote control (20).

3. The control module for controlling vehicle remote control (10) as claimed in claim 1, wherein when the mode switching control key (35) controls the signal switching switch (34) to ON (conducting), the control module for controlling vehicle remote control (10) enters a Bluetooth operation mode, and the Bluetooth controller device (30) is controllable via the Bluetooth signal (S1) emitted by the mobile device (50) to operate the vehicle remote control (20).

4. The control module for controlling vehicle remote control (10) as claimed in claim 1, wherein the vehicle remote control (20) further comprises: a signal transmission circuit (23) electrically connected to an output end of the processor (22).

5. The control module for controlling vehicle remote control (10) as claimed in claim 1, wherein the Bluetooth controller device (30) further comprises a buzzer, the buzzer is connected to the output end (350) of the mode switching control key (35); when the mode switching control key (35) is pressed to make the control module for controlling vehicle remote control (10) to enter either a remote-control operation mode or a Bluetooth operation mode, the buzzer will emit a first sound or a second sound, respectively.

6. The control module for controlling vehicle remote control (10) as claimed in claim 1, wherein the control module for controlling vehicle remote control (10) further comprises: a power supply module (40), and the power supply module (40) comprises a control module power supply (41), a first power switch (42), a second power switch (43), a first power supply switch (44), and a second power supply switch (45) to control power delivery to the vehicle remote control (20) and the Bluetooth controller device (30).

7. The control module for controlling vehicle remote control (10) as claimed in claim 1, wherein when the control module for controlling vehicle remote control (10) enters a Bluetooth operation mode, if the Bluetooth transceiver module (31) has not established a Bluetooth connection with the mobile device (50), power will not be supplied to the Bluetooth processor (32), the signal output circuit (33), and the vehicle remote control (20); if a Bluetooth connection exists between the Bluetooth transceiver module (31) and the mobile device (50), and the mobile device (50) has not issued a command to operate the vehicle remote control (20), power will not be supplied to the signal output circuit (33) and the vehicle remote control (20).

8. The control module for controlling vehicle remote control (10) as claimed in claim 1, wherein the Bluetooth processor (32) further comprises a mode detection input terminal (325) connected to the mode switching control key (35), and thereby the Bluetooth controller device (30) is notified whether the control module for controlling vehicle remote control (10) is currently operating in a remote-control operation mode or a Bluetooth operation mode.

9. An application method for the control module for controlling vehicle remote control (10) as claimed in claim 1, **characterized by** comprising:
an application executed by a mobile device (50);
the application determining a connection status between the mobile device (50) and a Bluetooth controller device (30) of a control module for controlling vehicle remote control (10) as claimed in claim 1;
when a connection established between the mobile device (50) and the Bluetooth controller device (30) is determined, the Bluetooth controller device (30) obtains an operation mode of a mode switching control key (35) of said control module for controlling vehicle remote control (10);
the application displaying a monochrome graphic block via the mobile device (50), wherein different colors in which the monochrome graphic block is displayed correspond to different connection statuses and/or operation modes.

10. An application method for the control module for controlling vehicle remote control (10) as claimed in claim 1, **characterized by** comprising:
an application executed by a mobile device (50);
the application determining whether a control module for controlling vehicle remote control (10) as claimed in claim 1 is switching between a remote-control operation mode and a Bluetooth operation mode;
when the application determines that said control module for controlling vehicle remote control (10) is switching between the remote-control operation mode and the Bluetooth operation mode, the application determining whether the mobile device (50) is still connected to said control module for controlling vehicle remote control (10);
when the application determines that the mobile device (50) is still connected to said control module for controlling vehicle remote control (10), the application determining, through a Bluetooth controller device (30) of said control module for controlling vehicle remote control (10), an operation mode to which said control module for controlling vehicle remote control (10) is switched, and then activating or deactivating a pause function according to the operation mode, causing the Bluetooth controller device (30) of said control module for controlling vehicle remote control (10) to stop or resume control of a vehicle remote control (20) of said control module for controlling vehicle remote control (10), the application also displaying a corresponding icon on the mobile device (50).

11. The application method as claimed in claim 10, wherein when said control module for controlling vehicle remote control (10) switches to the remote-control operation mode: the application activates the pause function, causing the mobile device (50) to cease control of the vehicle remote control (20) of said control module for controlling vehicle remote control (10), at this point, when a mobile device (50) paired with the Bluetooth controller device (30) of said control module for controlling vehicle remote control (10) approaches the Bluetooth controller device (30) from a distance, the Bluetooth controller device (30) of said control module for controlling vehicle remote control (10) connects to the mobile device (50) and, upon reaching close distances, issues a push notification message which causes the mobile device (50) to generate a corresponding push notification.

12. The application method as claimed in claim 10, wherein when said control module for controlling vehicle remote control (10) switches to the Bluetooth mode: the application disables the pause function, allowing the mobile device (50) to regain control of the vehicle remote control (20) of said control module for controlling vehicle remote control (10).
